# EUROPEAN PATENT SPECIFICATION

(11) **EP 1 762 744 B1**
(45) Date of publication and mention of the grant of the patent: **05.03.2008**
(21) Application number: 06254565.2
(22) Date of filing: 01.09.2006
(51) Int. Cl.: F16D 65/12

(54) **Drum brake and straddle-type vehicle**
Trommelbremse und Spreitzsitz-Fahrzeug
Frein à tambour et véhicule du type monté à califourchon

(30) Priority: 05.09.2005 JP 2005257051
(43) Date of publication of application: 14.03.2007
(73) Proprietor: Yamaha Hatsudoki Kabushiki Kaisha, Iwata-shi, Shizuoka-ken 438-8501 (JP)
(72) Inventor: Matsumura, Kuzunori, Iwata-shi Shizuoka-ken 438-8501 (JP); Sasaki, Tatsuya, Iwata-shi Shizuoka-ken 438-8501 (JP); Koya, Takao, Iwata-shi Shizuoka-ken 438-8501 (JP); Noguchi, Toyokatsu, Iwata-shi Shizuoka-ken 438-8501 (JP)
(74) Representative: Price, Nigel John King

(56) References cited:
- WO-A-92/01169
- GB-A- 2 221 265
- JP-A- 10 231 871
- US-B1- 6 264 012
- US-B1- 6 286 639

## Description

This invention relates to a drum brake for use in a straddle-type vehicle such as a motorcycle, four-wheeled buggy and snowmobile, as well as to a straddle-type vehicle provided with such a brake. The invention has particular application for preventing brake squeal and is simple in construction.

In some straddle-type vehicles, such as motorcycles, four-wheeled buggies, and snowmobiles, the wheels are provided with a drum brake. Generally such drum brakes have been of the type in which braking is achieved, via friction, by pressing a brake shoe against the inner surface of a rotating drum. There has been a problem of brake squeal with drum brakes of this sort, caused by the frictional vibration of the brake drum and the brake shoe matching the natural frequency of the brake components such as the brake drum, brake shoe, shoe plate, etc. This resonance can lead to uncomfortable noise.

It is known to seek to prevent brake squeal by adjusting the natural frequency of the brake components by changing the weights of those brake components subject to resonance by the above-mentioned frictional vibration. For example, JP 62-92331 U (published 12 June 1987) proposes a drum brake provided with a brake squeal prevention device comprising a pair of vibration-suppressing members, comprising semi-circular strip members such as steel plates, and a band made of an annular elastic material with its inside round surface having a shallow groove. The vibration-suppressing members fit into the groove in the band which is fitted around the outside circular surface of the brake drum.

This known drum brake prevents brake squeal by changing the weight of the brake drum thereby changing its natural frequency and preventing the brake drum from resonating with the frictional vibration.

However, a problem with this known brake squeal prevention device arises from the metallic vibration-suppressing members being fitted around the brake drum by means of the band of annular elastic material. This prevents the brake squeal prevention device from being attached to the brake drum of the wheel once the spokes have been assembled as in JP 62-92331. As a result after the spokes have been assembled, it is very difficult to service or replace a brake squeal prevention device fitted around the brake drum.
A further problem with this known brake squeal prevention device is that it is made up from a plurality of parts: a pair of vibration-suppressing members and a band. As, the number of parts increases, assembling the device to the brake drum requires time and effort. In addition, it is necessary to increase the size of the weight or the vibration-suppressing members in order to make the brake drum heavier. Because, however, the outside round surface area of the brake drum is limited there are limits on the size of the vibration-suppressing members that can be provided on the drum.
There is thus a need for a drum brake and a straddle-type vehicle of simple construction which can effectively prevent brake squeal.
GB-A-2 221 265 discloses a drum brake assembly. The assembly includes a backing plate which is supported adjacent its inner periphery, coaxially of an axle on a suspension member, by means of a plurality of angularly spaced bolts. A resilient metal strap is secured at one end to the suspension member by a bolt. The other end of the strap acts against the backing plate at a non-nodal position on its outer periphery and serves to damp out vibrations in the backing plate.
According to the present invention there is provided a drum brake comprising an installation member, a brake drum, a shoe plate, one or more brake shoes movable relative to the shoe plate, and a wheel shaft, wherein the installation member is positioned adjacent the brake drum in the wheel shaft direction and has a first portion and a second portion, the first portion being fixed to the shoe plate or another member and including a hole through which the wheel shaft extends, and the second portion being fixed to or pressed against the shoe plate, and wherein the natural frequency of a portion of the installation member between the first portion and the second portion is different from the natural frequency of the shoe plate.
Preferably, a constitution has portions of small amplitude and great amplitude when the shoe plate vibrates, in which the first portion of the installation member is fixed to the portion of small amplitude or fixed to another member located in the portion of small amplitude while the second portion of the installation member is fixed to or pressed against the portion of great amplitude.

Preferably, a constitution has portions of small amplitude and great amplitude when the shoe plate vibrates, in which the second portion of the installation member is fixed to or pressed against the portion of great amplitude, while the first portion of the installation member is fixed to a portion of the shoe plate apart from the second portion more than the wheel shaft in the diametral direction or to another member located in the portion of the shoe plate apart from the second portion more than the wheel shaft in the diametral direction.

Preferably, a constitution is made with the first portion of the installation member fixed to the wheel shaft through a cylindrical collar.

Preferably, a constitution is made with the installation member provided with an installation plate having a first portion on one end and a second portion on the other end and the cylindrical collar fixed to the first portion, with the cylindrical collar attached to the wheel shaft while the second portion of the installation plate fixed to or pressed against the shoe plate.

Preferably, a constitution is made with the second portion of the installation member fixed to or pressed against a turn stop portion of the shoe plate, and more preferably, with the second portion of the installation member fixed to the turn stop portion with a tightening member.

Preferably, a constitution is made with a clearance formed between a main portion of the installation member excluding the portion between the first and second portions and the shoe plate so that the main portion and the shoe plate keep non-contact state even when the shoe plate vibrates.

Preferably, a constitution is made that the installation member is made a rear arm for supporting a rear wheel through the wheel shaft, the rear arm is provided with the first and second portions, the wheel shaft is passed through the first portion and fixed while the turn stop portion of the shoe plate is fixed to the second portion.

There is also hereinafter described and illustrated a straddle-type vehicle provided with any of the drum brakes related to the above-described invention.

With the drum brakes and straddle-type vehicles hereinafter described and illustrated the natural frequency of the portion between the first and second portions of the installation member is different from the natural frequency of the shoe plate. Therefore, in the event that frictional vibration of the brake drum and the brake shoe occurs, because the vibration modes of the installation member and the shoe plate are different, friction occurs between the shoe plate and the second portion of the installation member, the vibration energy of the shoe plate is converted into frictional heat energy, and brake squeal can be prevented.

In this way, it is possible to attenuate shoe plate vibration and prevent brake squeal effectively by means of an installation member of a simple constitution.

Embodiments of drum brake and straddle-type vehicle in accordance with the invention will now be described hereinafter, by way if example only, with reference to the accompanying drawings, in which:
Fig. 1 is a right side view of a straddle-type vehicle related to a first embodiment of the invention.
Fig. 2 is an enlarged view of a drum brake related to the first embodiment of the invention.
Fig. 3 is a vertical sectional view of the above drum brake.
Fig. 4 is a front view of a shoe plate constituting the above drum brake.
Fig. 5 is an oblique view of a drum brake related to a second embodiment of the invention.
Fig. 6 is a side view of the installation member.
Fig. 7 is a front view of the installation member.
Fig. 8 is an enlarged view of a drum brake related to the second embodiment of the invention.
Fig. 9 is an enlarged view of a drum brake related to a third embodiment of the invention.
Fig. 10 partial enlarged view of a drum brake related to a fourth embodiment of the invention.

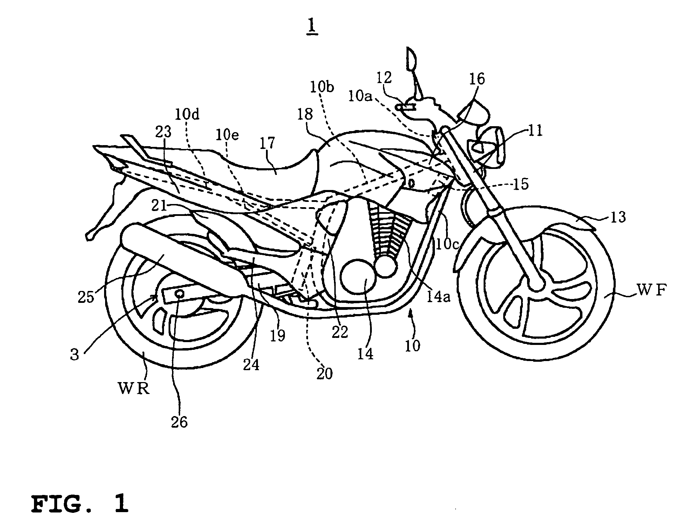

A straddle-type vehicle provided with a drum brake related to the embodiments is described with reference to Fig. 1. Fig. 1 is a right side view of a straddle-type vehicle (motorcycle) related to the embodiment.

In Fig. 1, a vehicle body frame 10 of a motorcycle 1 is a cradle-type frame, with a front fork 11 attached rotatably to a steering head tube 10a at the front end of the vehicle body frame 10. At the lower end of the front fork 11 is rotatably supported a front wheel WF, above which is provided a front fender for covering the front wheel WF. Handlebars 12 are attached to the upper end of the front fork 11.

To the steering head tube 10a are connected left and right main frames 10b extending obliquely rearwardly and downwardly and left and right down tubes 10c extending downward. An air-cooled, four-stroke engine 14 is mounted in a space surrounded by the main frames 10b and the down tubes 10c. The engine 14 has one or more upright cylinders 14a tilted slightly forward. The engine 14 is also connected to an oil cooler 15 via a pipe (not shown). The oil cooler 15 is attached to the down tubes 10c passing in front of the cylinder 14a and is located forward of the upper front part of the cylinder 14a. The oil cooler 15 is surrounded with a shroud 16 made of plastics material to direct passing air onto the oil cooler 15 to cool it.

Behind the main frame 10b are connected left and right seat rails 10d, 10d for supporting a seat 17. Back stays 10e are connected between the seat rails 10d and the rear portion of the main frame 10b to support the seat rails 10d. The seat rails 10d and the back stays 10e form a rear frame. While the rear frame is made as a combination of a plurality of pipes in this embodiment, it may take the form of a single body, for example an Aluminium casting.

A fuel tank 18 is placed in the vicinity of the connection of the seat rails 10d to the main frame 10b, so that the fuel tank bridges both of them. The fuel tank 18 is located above the engine 14, with the seat 17 positioned rearwardly of the fuel tank 18.

A pivot shaft attachment bracket (not shown) is fixed to the rear lower portion of the main frame 10b and a pivot shaft (not shown) is supported by the pivot shaft attachment bracket. The front end of a rear swing arm 19 is supported by the pivot shaft. Swinging of the rear arm 19 is controlled by a suspension 20. A movable fender 21 is mounted on the rear arm 19. At the rear end of the rear arm 19 a rear wheel WR is rotatably mounted on a wheel shaft 26. The rear wheel WR is provided with a drum brake 3 related to these embodiments. The drum brake is detailed below.

The area from below the rear part of the fuel tank 18 to below the front part of the seat 17 is covered with a side cover 22. The area below the area from the side to the rear part of the seat 17 is covered with a rear cover 23. Further, foot brackets 24, 24 are fixed to both left and right sides of the rear lower part of the main frame 10b. An exhaust pipe 25 extending toward the rear from the engine 14 is supported by the right hand foot bracket 24.

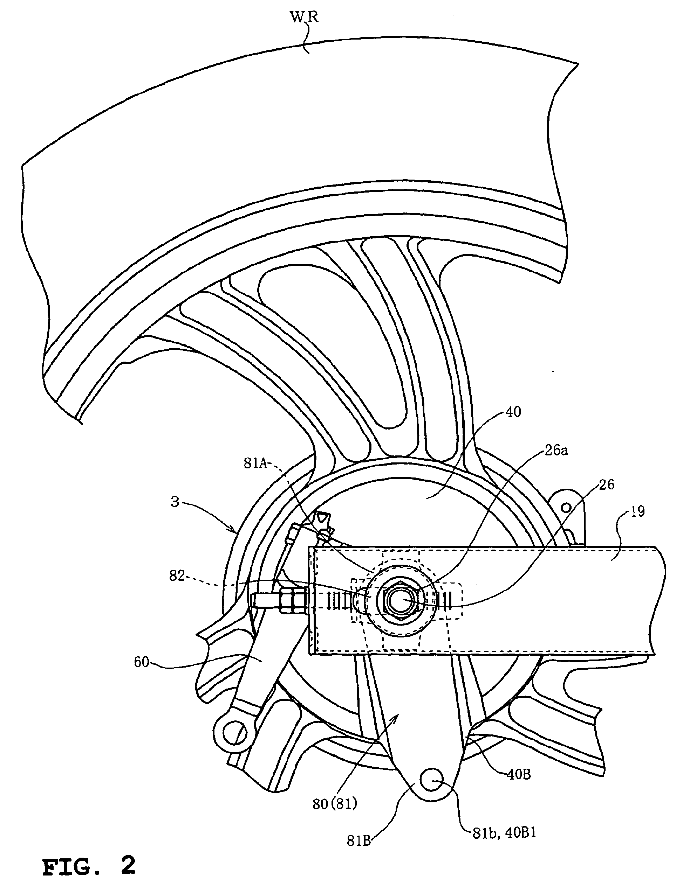

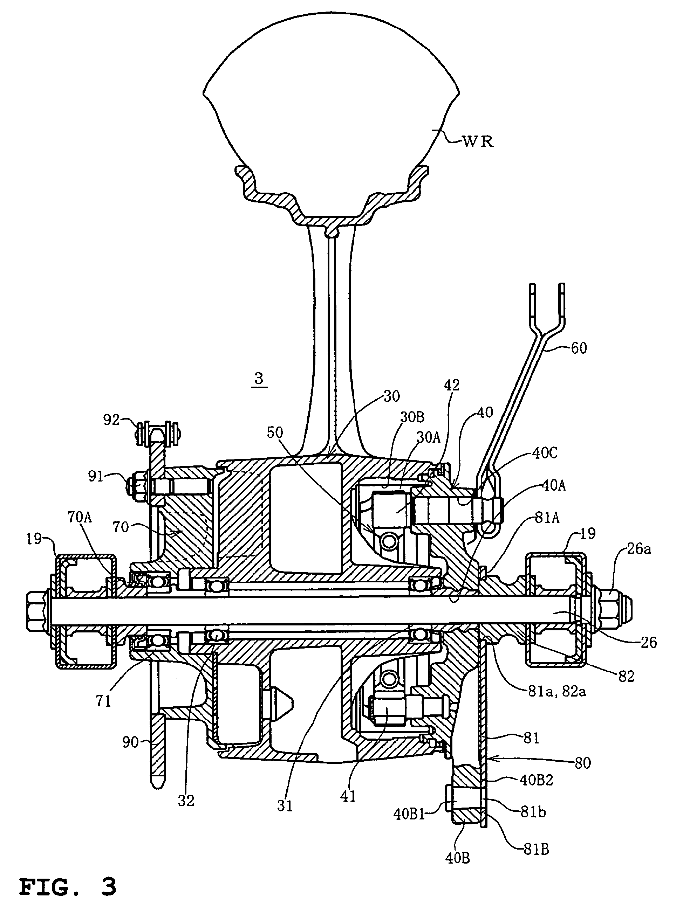

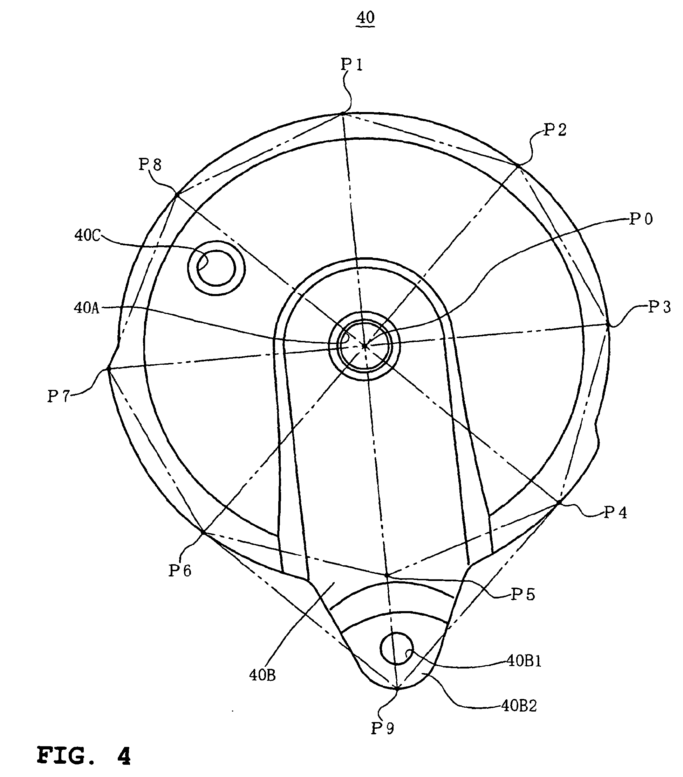

A drum brake related to a first embodiment of the invention will now be described with reference to Figs. 1 and 2 to 4. Fig. 2 is an enlarged view of a drum brake related to the first embodiment of the invention. Fig. 3 is a vertical sectional view of the drum brake. Fig. 4 is a front view of a shoe plate of the drum brake.

As shown in Figs. 2 and 3, the drum brake 3 is of an inside expansion type and includes the following main components: a brake drum 30, a shoe plate 40, a pair of brake shoes 50, a cam lever 60, a back plate 70, and an installation member 80.

The brake drum 30 is integral with the rear wheel WR and is rotatably supported through a pair of left and right bearings 31, 32 on the wheel shaft 26 of the rear arm 19. Thus, the brake drum 30 is able to rotate about the wheel shaft 26 together with the rear wheel WR. An inside space 30A for accommodating the brake shoes 50 is formed on one side (right side of the vehicle) of the brake drum 30, with the inside cylindrical surface of the inside space 30 serving as a friction surface 30B.

The opening of the inside space 30A of the brake drum 30 is covered with the shoe plate 40. The shoe plate 40 is (as shown in Fig. 4) a generally disc-shaped member in front view, with a wheel shaft insertion hole 40A provided in its center, and with an integrally formed turn stop portion 40B having a stepped shape and extending radially outwardly up to outside the radius from the wheel shaft insertion hole 40A. The shoe plate 40 is fixed to the rear arm 19 by inserting the wheel shaft 26 through the wheel shaft insertion hole 40A while tight-connecting the turn stop portion 40B to the rear arm 19 by means of a turn stop rod (not shown).

The inside of the shoe plate 40 is provided with a pivot shaft 41 extending toward the inside space 30A of the brake drum 30, with a pair of brake shoes 50 pivoted on the pivot shaft 41. The shoe plate 40 is also provided with a cam shaft insertion hole 40C adjacent in radial direction to the wheel shaft insertion hole 40A, with a camshaft 42 rotatably held in the cam shaft insertion hole 40C. The camshaft 42 engages through its cam with both of the brake shoes 50 within the inside space 30 of the brake drum 30.

The brake shoes 50 are respectively placed in the vicinity of the friction surface 30B of the brake drum 30 in a semicircular shape extending along the friction surface 30B, opposite to each other in the circumferential direction around the wheel shaft 26. The brake shoes 50 are pivoted respectively at one end on the pivot shaft 41, and their other ends are free to pivot (expand inside) about the pivot shaft 41 in the diametral direction of the brake drum 30. The other ends of the brake shoes 50 engage with the cams of the camshaft 42 as described above.

The brake shoes 50 are each provided with a pair of springs (not shown) to force them away from the friction surface 30B of the brake drum 30 and press respective other ends of the brake shoes 50 against the camshaft 42. The brake shoes 50 are of known construction, their base portions being made of metal having sufficient strength and rigidity, and their surfaces on the sides of the friction surfaces 30B have linings attached.

The cam lever 60 is attached to the other end of the camshaft 42 projecting outward of the shoe plate 40, and extends outward in the diametral direction of the shoe plate 40. The tip of the cam lever 60 is connected to a rod (not shown) and is movable as a result of being interlocked with the brake pedal of the motorcycle 1 described above.

When the brake pedal is operated or depressed, the rod moves in a straight line as the brake pedal turns, and the cam lever 60 turns in response to the straight line motion. The camshaft 42 is interlocked with the cam lever 60 so that turning of the cam lever 60 causes respective brake shoes 50 engaged with the cams of the camshaft 42 to pivot (expand outwardly) toward the friction surface 30B of the brake drum 30. As a result, braking force is produced at the rotating rear wheel WR.

At this time, if the frictional vibration of the brake drum 30 and the brake shoes 50 matches the natural frequency of the brake components, resonance occurs to produce uncomfortable brake squeal. This embodiment, however, prevents brake squeal because the installation member 80 is provided. The installation member 80 will be detailed below.

On the other side (left side) of the vehicle there is provided a back plate 70. The back plate 70 is supported on the wheel shaft 26 to turn freely on a bearing 71 installed in its shaft layer insertion hole 70A. A sprocket 90 is fixed to the outside face of the back plate 70 using a plurality of bolts 91. The sprocket 90 engages through its cogs with a chain 92 that transmits drive from the engine 14 described above. The back plate 70 turns as it receives driving force from the engine 14 via the sprocket 90 and the chain 92, and the rotation is transmitted to the brake drum 30 to rotate the rear wheel WR.

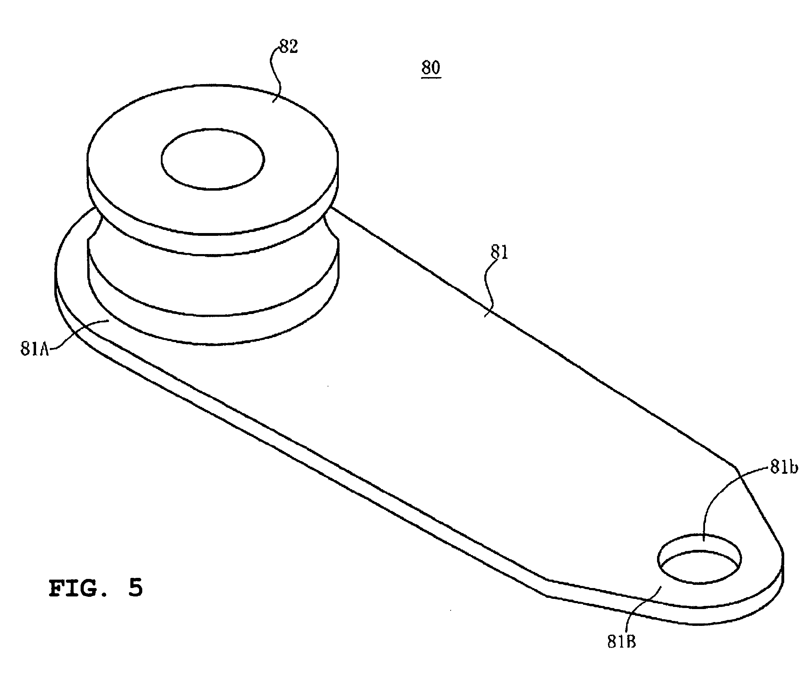

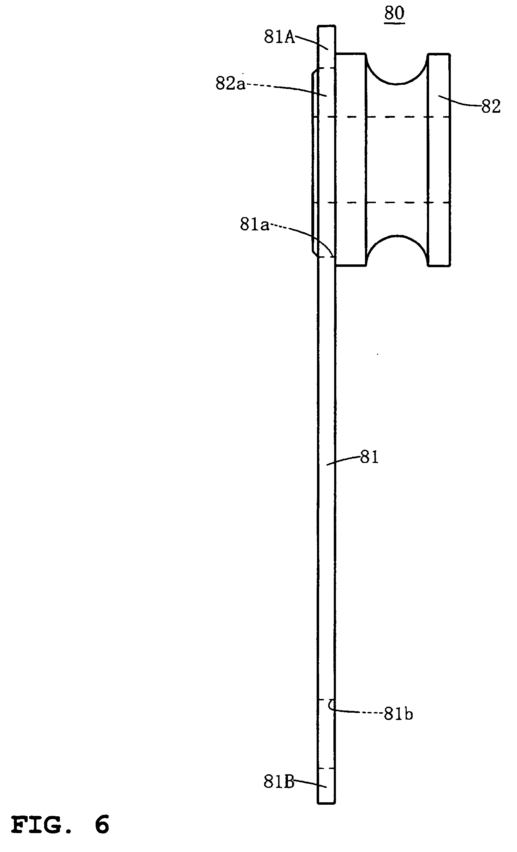

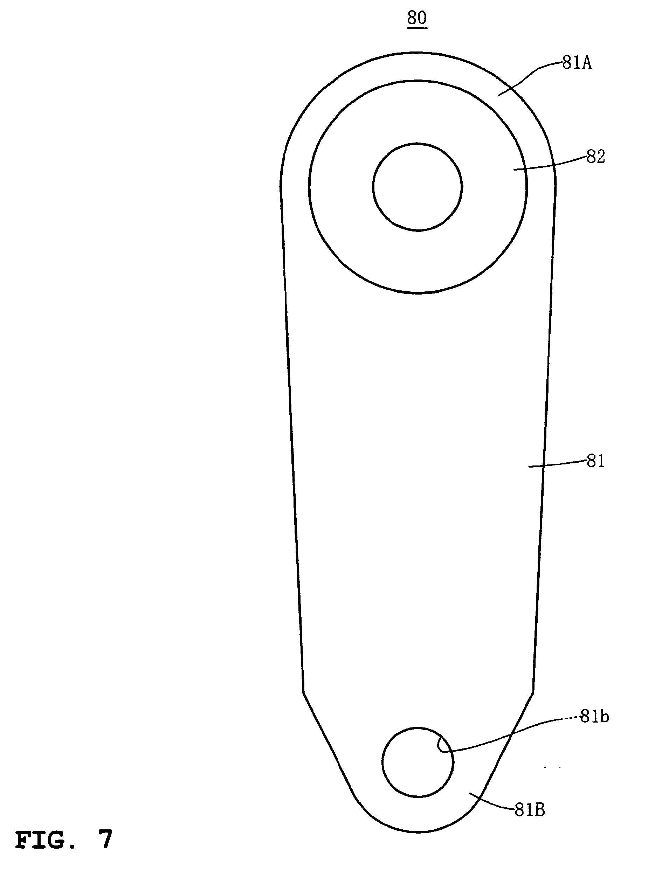

Next, the installation member for preventing brake squeal of the brake drum is described with reference to Figs. 2 to 4 and 5 to 7. Fig. 5 is an oblique view of the installation member for attachment to the drum brake. Fig. 6 is a side view of the installation member. Fig. 7 is a front view of the installation member.

First, the construction of the installation member 80 is described with reference to Figs. 5 to 7. The installation member 80 is mainly constituted by a metallic installation plate 81, with a cylindrical collar 82 welded to one end. The installation plate 81, as shown in Figs. 2 and 4, is of a shape similar to that of the turn stop portion 40B of the shoe plate 40. The plate 81 has a first portion 81A for fixing to the shoe plate 40 and a second portion 81B. The first portion 81A is provided with an attachment hole 81a for the cylindrical collar 82. The second portion 81B is provided with an attachment hole 81b matching a rod tight-connecting hole 40B1 provided in the turn stop portion 40B.

Because the installation plate 81 (as will be described below) is to produce friction between itself and the shoe plate 40 vibrating at the second portion 81B and to attenuate this vibration, it requires rigidity of an extent that does not follow the vibration of the shoe plate 40. Therefore, the higher the rigidity of the installation plate 81, the more effectively is produced friction with the vibrating shoe plate 40, so that vibration of the shoe plate 40 is efficiently attenuated.

On the other hand, the cylindrical collar 82 is a member for easily fixing the installation plate 81 to the wheel shaft 26, and is made in the shape of a thick-walled cylinder provided around its periphery with a rounded groove. The inside diameter of the cylindrical collar 82 is approximately the same as the outside diameter of the wheel shaft 26, so as to be fitted onto the wheel shaft 26 as shown in Fig. 3.

The first portion 81A of the installation plate 81 is fixed to the position of the wheel shaft insertion hole 40A of the shoe plate 40 by fitting the cylindrical collar 82 together with the rear arm 19 over the wheel shaft 26 and tightening the nut 26a screwed on one end of the wheel shaft 26. At this time, the second portion 81B of the installation plate 81 matches the fixing surface 40B2 of the turn stop portion 40B of the shoe plate 40. There, the second portion 81B of the installation plate 81 is fixed to the fixing surface 40B2 of the turn stop portion 40B by inserting a tightening bolt (not shown), for fixing the turn stop rod, into the aligned attachment hole 81b and the rod tightening hole and tightening the bolt.

Further, one end of the cylindrical collar 82 is formed with a stepped attachment portion 82a. Fitting the attachment hole 81a of the installation plate 81 to the stepped attachment portion 82a holds the installation plate 81, attached to the wheel shaft 26, at the level of the fixing surface 40B2 of the turn stop portion 40B. As shown in Fig. 3, the fixing surface 40B2 is formed to be slightly higher than other surface of the turn stop portion 40B other than that, so that the second portion 81B of the installation plate 81 comes into surface contact only with the fixing surface 40B2.

Such a construction makes it possible to limit the contact surface between the installation plate 81 and the shoe plate 40 to the first and second portions 81A and 81B that are necessary for producing frictional heat energy, leaving the other areas (i.e. the main portion excluding the first and second portions 81A and 81B of the installation plate 81) free from contact. This makes it possible to prevent the installation plate 81 and the shoe plate 40 from contacting unnecessarily, vibrating and producing new brake squeal.

The principle of brake squeal prevention with the installation member 80 of the above constitution is described. The principle of brake squeal prevention of this invention is that the installation member 80 as a brake component, being fixed at least at one point, differs from the shoe plate 40 in natural frequency when receiving frictional vibration of the brake drum 30 and the brake shoe 50. By being pressed against or fixed to the shoe plate 40 by surface contact the vibration energy of the shoe plate 40 is converted by friction into heat at the contact surface.

By way of illustration, if an installation member 80 that is not vibrating at all is brought into surface contact with a shoe plate 40 is resonating with frictional vibration, friction will occur at the contact surface and the vibration energy of the shoe plate 40 will be converted into frictional heat energy and attenuated.

Incidentally, the term "natural frequency" in this invention does not mean the vibration due to input from outside when an object such as the shoe plate 40 and the installation member 80 are in a free state according to general definition. The "natural frequency" in this invention means the natural frequency of the portion between two portions: the first portion 81A and the second portion 81B.

To attenuate vibration of the shoe plate 40 effectively according to the above principle, the inventors measured the vibration mode of the shoe plate 40. Specifically, as shown in Fig. 4, with the wheel shaft insertion hole 40A of the shoe plate 40 made a fixed point p0, acceleration sensors (not shown) were placed at intersections P1 to P9 of the phantom lines on the figure to measure the vibration mode of the shoe plate 40. As a result, it was found that the shoe plate 40 mainly vibrates to wave up and down in the direction of the wheel shaft 26 and that the amplitude is greatest at points furthest away from the wheel shaft insertion hole 40A in the diametral direction.

Therefore, for the installation member 80 of this embodiment, and as described above, the second portion 81B of the installation plate 81 is fixed to the end of the turn stop member 40B where amplitude is greater than the other portion. This makes it possible to attenuate vibration at the point of greatest amplitude and effectively prevent brake squeal.

Because the rod tightening hole 40B1 and the fixing surface 40B2 for fixing the turn stop rod are provided on the turn stop member 40B, there is also an advantage that the second portion 81B of the installation plate 81 may be fixed without providing an additional attachment portion on the shoe plate 40.

Next, choosing the fixing point of the first portion 81A of the installation plate 81 on the shoe plate 40 is described. First, as described above, in case the second portion 81B is fixed to a portion of greater amplitude as described above, fixing the first portion 81A to the vicinity of the fixing point P0, a location of small amplitude of the shoe plate 40 like this embodiment, or fixing to the vicinity of the wheel shaft insertion hole 40A, is effective for attenuating vibration. This is because it is possible to increase the displacement, due to difference in both natural frequency and vibration mode, of the portion between the first portion 81A and the second portion 81B of the installation plate 81 relative to the shoe plate 40.

On the other hand, in case the first portion 81A is fixed to a portion (a portion of small difference in amplitude phase) that vibrates in the same mode as the portion where the second portion 81B of the shoe plate 40 is fixed, it is thought that the installation plate undesirably follows the amplitude of the shoe plate 40, friction on mutual contact surfaces decreases, and the effect of vibration attenuation decreases.

For example, the points P5 and P9 on the shoe plate 40 shown in Fig. 4 are radially close to each other, both centered on the fixed point P0, and thought to vibrate in approximately the same mode. Therefore, in the event that the first portion 81A of the installation plate 81 is fixed to the point P5 and the second portion 81B is fixed to the point P9, it is thought that the installation plate 81 disadvantageously follows the amplitude of the points P5 and P9, and friction on mutual contact surfaces decreases.

In contrast, in case the first portion 81A is fixed to a portion of the shoe plate 40 that vibrates in a mode different from the portion (a portion of great amplitude phase difference) where the second portion 81B is fixed, it is thought that friction on mutual contact surfaces increases, and the effect of vibration attenuation increases.

For example in Fig. 4, the points P1 and P9 centered on the fixed point P0 of the shoe plate 40 are radially apart from each other and thought to vibrate in different modes. Therefore, in the event that the first portion 81A of the installation plate 81 is fixed to the point P1 while the second portion 81B is fixed to the point P9, it is thought that the installation plate 81 does not follow the amplitude at these points P1 and P9, and friction on mutual contact surfaces increases.

As a result of the above vibration mode measurement, it became at least known that, on a disc-shaped shoe plate 40 such as shown in Fig. 4, two points on both sides of a borderline, with a diametral straight line passing the fixed point P0, are different from each other in vibration mode. Therefore, if the second portion 81B of the installation plate 81 is fixed to the point P9, it is thought that also in case the first portion 81A is fixed to one of the points P2, P3, P8, and P7 apart from the point P9 farther than the point P0, the installation plate 81 does not follow the amplitude of one of the points P2, P3, P8, and P7, and the friction on mutual contact surfaces increases.

In the drum brake 3 related to this embodiment and the motorcycle (straddle-type vehicle) 1 provided with that brake, the natural frequency of the portion between the first portion 81A and the second portion 81B of the installation member 80 (installation plate 81) is different from the natural frequency of the shoe plate 40. Therefore, in case frictional vibration of the brake drum 30 and the brake shoe 50 occurs, the installation member 80 is different in natural vibration from the shoe plate 40 and friction occurs between the second portion 81B of the installation member 80 and the shoe plate 40 (fixed surface 40B2). This makes it possible to convert vibration energy of the shoe plate 40 into frictional heat energy, attenuate vibration of the shoe plate 40, and prevent brake squeal.

Because the second portion 81B of the installation member 80 of this embodiment is fixed to the turn stop portion 40B of great amplitude of the shoe plate 40, it is possible to convert greater vibration of the shoe plate 40 into greater frictional heat energy and prevent brake squeal effectively.

Furthermore, as described above, vibration of the disc-shaped shoe plate 40 is smallest in amplitude in the vicinity of the wheel shaft 26 and greater in amplitude at locations away from the wheel shaft 26 in the radial direction. In case the first portion 81A and the second portion 81B of the installation member 80 are too close to each other, vibration modes of the shoe plate 40 in both portions end up approximating each other, the installation member 80 ends up following the vibration of the shoe plate 40, and friction of the installation member 80 and the shoe plate 40 in the second portion 81B ends up decreasing.

Therefore, it is possible to effectively prevent brake squeal by producing greater frictional heat energy in the second portion 81B by fixing the second portion 81B of the installation member 80 to the portion of greater amplitude of the shoe plate 40 while fixing the first portion 81A of the installation member 80 to the wheel shaft 26 affected less with the amplitude of the shoe plate 40.

The installation member 80 of this embodiment, although simple in construction, is capable of effectively preventing squeal of the drum brake 3 from occurring. It is also possible easily to attach the installation member 80 to the shoe plate 40 by fitting the cylindrical collar 82 over the wheel shaft 26, and also easily to retrofit it to the drum brake 3 of an existing motorcycle 1 or other straddle-type vehicle.

This embodiment also makes it possible to fix easily the second portion 81B of the installation member 80 utilizing the existing turn stop portion (connecting portion of the turn stop rod) 40B and using a tightening member such as a bolt. This not only simplifies the installation member 80 itself but also the installation structure.

In addition to this, in this embodiment the contact points of the installation member 80 and the shoe plate 40 are limited to the first and second portion 81A and 81B necessary for producing frictional heat energy while other areas (main portion excluding the first and second portions 81A and 81B of the installation plate 81) are free from contact. Owing to this, it is possible to prevent the installation plate 81 and the shoe plate 40 from contacting in unnecessary portions, vibrating, and producing new brake squeal.

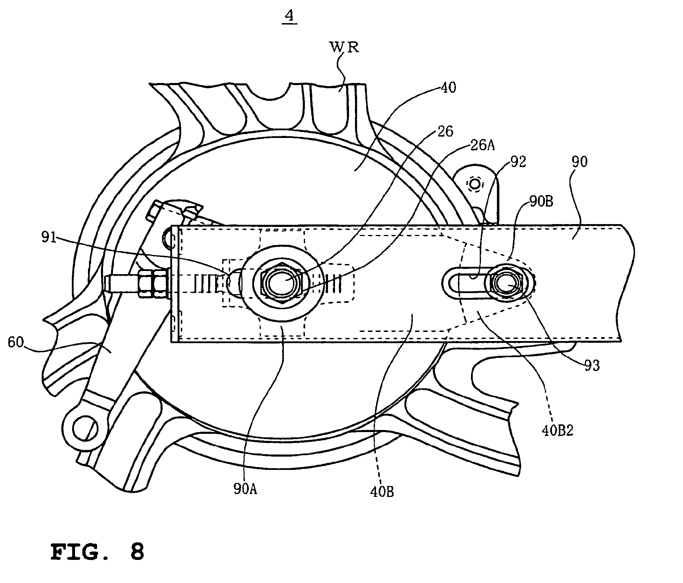

Next, a drum brake related to a second embodiment of the invention with be described by reference to Fig. 8. Fig. 8 is an enlarged view of the drum brake related to the second embodiment of the invention. In the second embodiment described below, parts similar to those of the first embodiment described above are provided with the same symbols and detailed description of them omitted.

In Fig. 8, as for the drum brake 4 related to this embodiment, the above installation member 80 (See Figs. 3 and 5) is assumed to be the rear arm 90 for supporting the rear wheel via the wheel shaft 26. The rear arm 90, is constituted like the installation member 80 to have a first and second portions 90A and 90B, with the wheel shaft 26 inserted in and fixed to the first portion 90A, and with the turn stop portion 40B of the shoe plate 40 fixed to the second portion 90B.

The first portion 90A of the rear arm 90 is formed with an elongated hole 91 for inserting an end portion of the wheel shaft 26. The elongated hole 91 is for adjusting the slack or the like of a chain by moving the wheel shaft 26 in the fore-and-aft direction of the vehicle. Similar to this, an elongated hole 92 extending in the fore-and-aft direction of the vehicle is formed in the second portion 90B of the rear arm 90 so that the tightening position of the bolt 93 to be fixed to the turn stop portion 40B may be changed to follow the displacement of the wheel shaft 26.

Like the first embodiment described above, the fixing surface 40B2 of the turn stop portion 40B is made slightly higher than other portion of the turn stop portion 40B, so that the second portion 90b of the rear arm 90 comes into surface contact with the fixing surface 40B2 only.

With the drum brake 4 of this embodiment, like with the first embodiment described above, the natural frequency of the portion between the first portion 90A and the second portion 90B is different from the natural frequency of the shoe plate 40. Due to this, in the event that frictional vibration of the brake drum 30 and the brake shoe 50 (Refer to Fig. 3) occurs, vibration modes of the rear arm 90 and the shoe plate 40 differ and friction occurs between the second portion 90B of the rear arm 90 and the shoe plate 40 (fixed surface 40B2). Due to this, the vibration energy of the shoe plate 40 is converted to frictional heat energy, vibration of the shoe plate 40 is attenuated, and brake squeal is prevented.

It is also possible to make the rear arm 90 itself the installation member 80, so that brake squeal is effectively prevented without otherwise additionally providing an installation member 80 while reducing the number of parts.

Further, in case the portion between the first portion 90A and the shoe plate 40 is formed with a member that can be deemed to be an almost rigid body vibrating together with the shoe plate, the same functional effect as with the first embodiment is provided even if the first portion 90A is not directly fixed to the shoe plate 40.

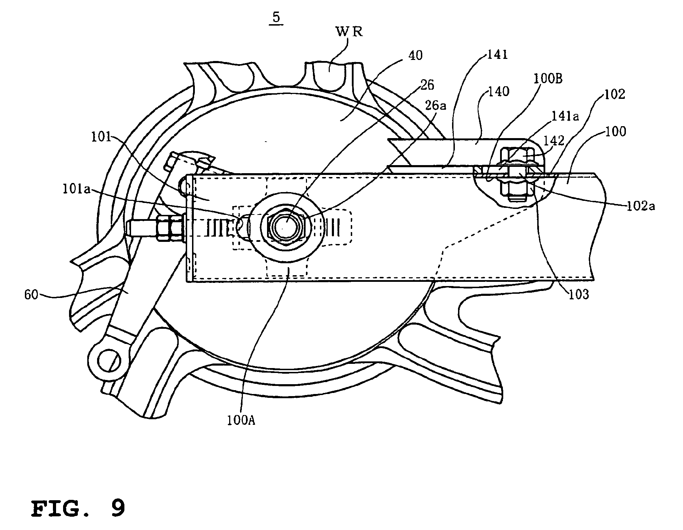

Next, a drum brake related to a third embodiment of the invention is described in reference to Fig. 9. Fig. 9 is an enlarged view of a drum brake related to the third embodiment of the invention. In the third embodiment described below, parts similar to those of the first or second embodiments described above are provided with the same symbols and detailed description is omitted.

In Fig. 9, the drum brake related to this embodiment is constituted with the above installation member 80 (See Figs. 3 and 5) made the rear arm 100. In this embodiment, however, the turn stop portion 140 of the shoe plate 40 is changed in constitution.

First, the rear arm 100 has the first portion 100A in the vicinity of the end portion of its side wall portion 101 and also has the second portion 100B at its upper wall portion 102. An elongate hole 101a extending in fore-and-aft direction of the vehicle is formed in the first portion 100A. The wheel shaft 26 inserted into the elongated hole 101a is tightened with a nut 26a.

In the second portion 100B there is an attachment hole 102a passing through the upper wall portion 102. A nut 103 with its thread hole matching the attachment hole 102a is welded to the reverse side of the upper wall portion 102. The bolt 142 inserted into the turn stop portion 140 of the shoe plate 40 is tightened into the nut 103 to fix the turn stop portion 140 to the second portion 100B.

The turn stop portion 140 is made approximately parallel to the rear arm 100 of an inverted L plate shape in cross-section integral with the shoe plate 40. The turn stop portion 140 has a fixing portion 141 in surface contact with the upper wall portion 102 of the rear arm 100. An elongated hole 141a for inserting the bolt 142 is formed in the fixing portion 141. The elongated hole 141a extends in the fore-and-aft direction of the vehicle so that the tightening position of the bolt 142 for fixing the turn stop portion 140 may be changed following the displacement of the wheel shaft 26 when it is moved along the elongated hole 101a provided in the first portion 101A of the rear arm 100.

With the drum brake 5 of this embodiment as described above, like with the first embodiment, the natural frequency of the portion between the first portion 100A and the second portion 100B of the rear arm 100 is different from the natural frequency of the shoe plate 40. Because of this, in case frictional vibration of the brake drum 30 and the brake shoe 50 (Refer to Fig. 3) occurs, the rear arm 100 and the shoe plate 40 are different in vibration mode, and friction occurs between the second portion 100B of the rear arm 100 and the shoe plate 40 (fixed portion 141). Due to this, the vibration energy of the shoe plate 40 is converted to frictional heat energy, vibration of the shoe plate 40 is attenuated, and brake squeal is prevented.

Like in the second embodiment, the rear arm 100 itself can thus incorporate the installation member 80 to effectively prevent brake squeal while reducing the number of parts by avoiding the need to provide the installation member 80 separately.

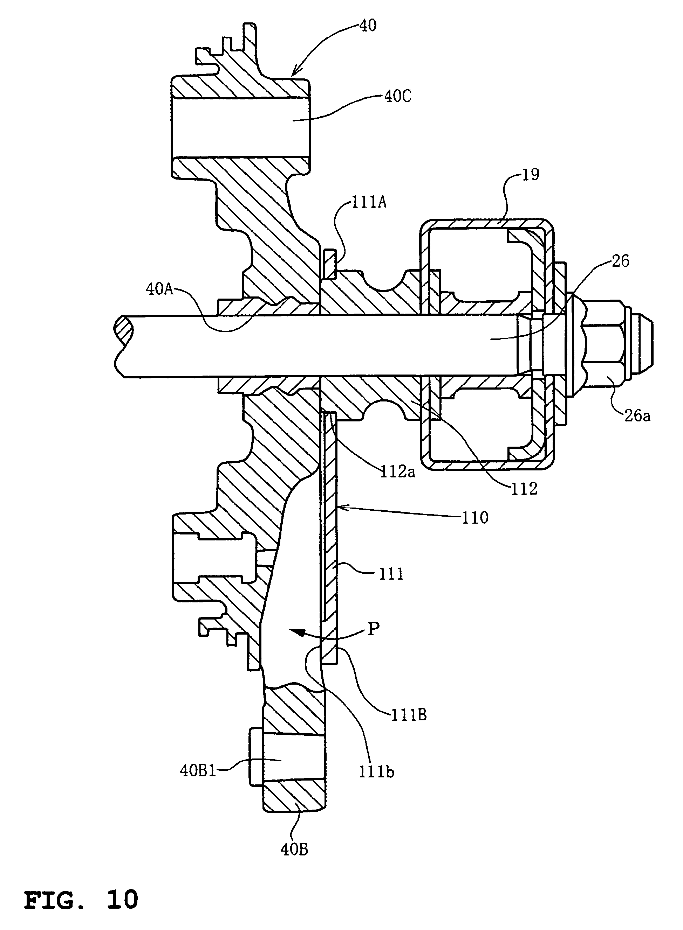

Next, a drum brake related to a fourth embodiment of the invention is described with reference to Fig. 10. Fig. 10 is an enlarged partial view of the drum brake related to the fourth embodiment of the invention. In the fourth embodiment described below, the parts similar to those of the first to third embodiments are provided with the same symbols and detailed description is omitted.

In Fig. 10 the drum brake 6 of this embodiment is of a construction provided with an installation member 110 made up of an installation plate 111 and a cylindrical collar 112. In particular, this embodiment is characterized in that the second portion 111B of the installation plate 111 is provided with a projecting, step-shaped press contact portion 111b, so that the press contact portion 111b is pressed against the surface of the shoe plate 40 with an urging force provided by the installation plate 111.

As a means for giving the urging force to the press contact portion 111b, for example, before being fixed to the wheel shaft 26 the installation plate 111 may be provided with a slight forward tilt in the direction opposite the projecting direction (the direction of arrow P in the figure) of the cylindrical collar 112. This results in that the installation plate 111 produces an urging force in the direction of arrow P in the figure when the cylindrical collar 112 is fixed to the wheel shaft 26.

Further, to the first portion 111A of the installation plate 111 is fitted, like in the first embodiment, the step-shaped attachment portion 112a of the cylindrical collar 112, so as to keep the first portion 111A side of the installation plate 111 at the height of the contact portion 111b on the surface of the shoe plate 40 when the cylindrical collar 112 is fixed to the wheel shaft 26. The result of this is that only the contact portion 111b of the installation plate 111 comes into contact with the surface of the shoe plate 40.

With the drum brake 6 of this embodiment, like with the first embodiment, the natural frequency of the portion between the first portion 111A and the second portion 111B of the installation member 110 (installation plate 111) is different from the natural frequency of the shoe plate 40. As a result, when frictional vibration of the brake drum 30 and the brake shoe 50 (Refer to Fig. 3) occurs, vibration modes of the installation member 110 and the shoe plate 40 are different, and friction occurs between the contact portion 11b and the shoe plate 40 in the second portion 111B of the installation 110. Due to this, vibration energy of the shoe plate 40 is converted to frictional heat energy, vibration of the shoe plate 40 is attenuated, and it is possible to prevent brake squeal.

Because in this embodiment the contact portion 11b is formed by the second portion 111B of the installation member 110 and the contact portion 111b is pressed against the surface of the shoe plate 40, the second portion 111B need not be fixed with bolts and nuts, and attachment to the shoe plate 40 is further facilitated.

The drum brake and the straddle-type vehicle of the invention are not limited to the above embodiments. For example, this invention makes it possible to prevent brake squeal in the drum brake of not only the inside expansion type drum brakes (as in the above embodiments), but also outside contact type drum brakes, once frictional vibration occurs. In the case of inside expansion type drum brakes, this invention may be applied to both double leading-shoe types and leading-and-trailing shoe types.

In all the above embodiments, while the installation member is made a thin, lightweight, plate-shaped body, it is not limited to the plate-shaped body but may be variously changed in many respects such as shape and weight.

Further, the present invention is not just applicable to motorcycles 1 of the type shown in Fig. 1, but is applicable to other two-wheeled vehicles, scooters, off-road vehicles, tricycles, four-wheeled buggies (all-terrain vehicles) and straddle-type vehicles such as snowmobiles.
1: straddle-type vehicle (motorcycle)
3, 4, 5, 6: drum brake
19, 90, 100: rear arm
26: wheel shaft
30: brake drum
30A: inside space
30B: friction surface
31, 32: bearings
40: shoe plate
40A: wheel shaft insertion hole
40B: turn stop portion
40B1: rod tightening hole
40B2: fixing surface
40C: camshaft insertion hole
41: pivot shaft
42: camshaft
50: brake shoe
60: cam lever
70: back plate
80, 110: installation member
81, 111: installation plate
81A, 111A: first portion
81B, 111B: second portion
111b: press contact portion
82, 112: cylindrical collar

## Claims

1. A drum brake (3, 4, 5, 6) comprising an installation member (80, 110), a brake drum (30), a shoe plate (40), one or more brake shoes (50) movable relative to the shoe plate, and a wheel shaft (26), wherein the installation member is positioned adjacent the brake drum in the wheel shaft direction and has a first portion (81 A, 90A, 100A, 111A) and a second portion (81B, 90B, 100B, 111B), the first portion being fixed to the shoe plate or another member and including a hole through which the wheel shaft extends, and the second portion being fixed to or pressed against the shoe plate, and wherein the natural frequency of a portion of the installation member between the first portion and the second portion is different from the natural frequency of the shoe plate.

2. The drum brake according to Claim 1, wherein, when the shoe plate (40) vibrates it has a portion of smaller amplitude vibration and a portion of greater amplitude vibration, and wherein the first portion of the installation member (80, 110) is fixed to the portion of smaller amplitude vibration or fixed to another member located at the portion of smaller amplitude vibration and the second portion of the installation member is fixed to or pressed against the portion of greater amplitude vibration.

3. The drum brake according to Claim 1, wherein, when the shoe plate (40) vibrates it has a portion of smaller amplitude vibration and a portion of greater amplitude vibration, and wherein the second portion of the installation member (80, 110) is fixed to or pressed against the portion of greater amplitude vibration, and the first portion of the installation member is fixed to a portion of the shoe plate spaced apart from the second portion in the radial direction of the wheel shaft (26) or to another member located at a portion of the shoe plate spaced apart from the second portion in the radial direction of the wheel shaft.

4. The drum brake according to Claim 1, wherein the first portion (81A, 111A) of the installation member (80, 110) is fixed to the wheel shaft (26) through a cylindrical collar (82, 112) to the wheel shaft, the hole extending through the cylindrical collar.

5. The drum brake according to Claim 4, wherein the installation member (80, 110) is provided with an installation plate (81, 111) having a first portion (81A, 111A) at one end of the installation plate and a second portion (81B, 111B) at the other end of the installation plate, wherein the hole extends through the first portion of the cylindrical plate, the cylindrical collar (82, 112) is fixed to the first portion of the installation plate, and is also attached to the wheel shaft (26), and the second portion of the installation plate is fixed to or pressed against the shoe plate (40).

6. The drum brake according to Claim 1, wherein the second portion (81B, 90B, 100B, 111B) of the installation member (80, 110) is fixed to or pressed against a turn stop portion (40B) of the shoe plate (40).

7. The drum brake according to Claim 6, wherein the second portion (81B, 90B, 100B, 111B) of the installation member is fixed to the turn stop portion (40B) with a tightening member.

8. The drum brake according to Claim 1, wherein a clearance is formed between the shoe plate (40) and the portion of the installation member (80, 110) that is between the first and second portions (81A, 111A, 81B, 111B) of the installation member and said clearance is maintained through continuous no-contact even when the shoe plate vibrates.

9. The drum brake according to Claim 1, wherein the installation member comprises part of a rear arm (90, 100) for supporting a rear wheel (WR) through the wheel shaft (26), the rear arm being provided with the first and second portions (90A, 100A, 90B, 100B) of the installation member, and the wheel shaft being passed through the first portion and fixed and a turn stop portion (40B) of the shoe plate (40) being fixed to the second portion.

10. A straddle-type vehicle (1) provided with a drum brake (3, 4, 5, 6) according to any one of Claims 1 to 9.

## Patentansprüche

1. Trommelbremse (3, 4, 5, 6), aufweisend ein Installationselement (80, 101), eine Bremstrommel (30), eine Backenplatte (40), eine oder mehrere Bremsbacken (50), die relativ zu der Backenplatte beweglich sind, und einen Radschaft (26), wobei das Installationselement in der Radschaft-Richtung der Bremstrommel benachbart positioniert ist und einen ersten Abschnitt (81A, 90A, 100A, 111A) und einen zweiten Abschnitt (81B, 90B, 100B, 111B) hat, wobei der erste Abschnitt an der Backenplatte oder einem anderen Element befestigt ist und ein Loch aufweist, durch das sich der Radschaft erstreckt, und wobei der zweite Abschnitt an der Backenplatte befestigt ist oder dagegen gepresst ist, und wobei die Eigenfrequenz eines Abschnitts des Installationselements zwischen dem ersten Abschnitt und dem zweiten Abschnitt von der Eigenfrequenz der Backenplatte verschieden ist.

2. Trommelbremse nach Anspruch 1, wobei, wenn die Backenplatte (40) vibriert, sie einen Abschnitt mit Vibration kleinerer Amplitude und einen Abschnitt mit Vibration größerer Amplitude hat und wobei der erste Abschnitt des Installationselements (80, 110) an dem Abschnitt mit Vibration kleinerer Amplitude befestigt ist oder an einem anderen Element, das an dem Abschnitt mit Vibration kleinerer Amplitude angeordnet ist, befestigt ist und der zweite Abschnitt des Installationselements an dem Abschnitt mit Vibration größerer Amplitude befestigt ist oder dagegen gepresst ist.

3. Trommelbremse nach Anspruch 1, wobei, wenn die Backenplatte (40) vibriert, sie einen Abschnitt mit Vibration kleinerer Amplitude und einen Abschnitt mit Vibration größerer Amplitude hat und wobei der zweite Abschnitt des Installationselements (80, 110) an dem Abschnitt mit Vibration größerer Amplitude befestigt ist oder dagegen gepresst ist und der erste Abschnitt des Installationselements an einem Abschnitt der Backenplatte befestigt ist, der von dem zweiten Abschnitt in der radialen Richtung des Radschaftes (26) beabstandet ist, oder an einem anderen Element befestigt ist, das an einem Abschnitt der Backenplatte angeordnet ist, der von dem zweiten Abschnitt in der radialen Richtung des Radschaftes beabstandet ist.

4. Trommelbremse nach Anspruch 1, wobei der erste Abschnitt (81A, 111A) des Installationselements (80, 110) an dem Radschaft (26) befestigt ist durch einen zylindrischen Kragen (82, 112) an dem Radschaft, wobei sich das Loch durch den zylindrischen Kragen erstreckt.

5. Trommelbremse nach Anspruch 4, wobei das Installationselement (80, 110) mit einer Installationsplatte (81, 111) versehen ist, die einen ersten Abschnitt (81A, 111A) an einem Ende der Installationsplatte und einen Abschnitt (81 B, 111 B) an dem anderen Ende der Installationsplatte hat, wobei sich das Loch durch den ersten Abschnitt der zylindrischen Platte hindurch erstreckt, der zylindrische Kragen (82, 112) an dem ersten Abschnitt der Installationsplatte befestigt ist und auch an dem Radschaft (26) angebracht ist und der zweite Abschnitt der Installationsplatte an der Backenplatte (40) befestigt ist oder dagegen gepresst ist.

6. Trommelbremse nach Anspruch 1, wobei der zweite Abschnitt (81 B, 90B, 100B, 111 B) des Installationselements (80, 110) an einem Drehstopp-Abschnitt (40B) der Backenplatte (40) befestigt ist oder dagegen gepresst ist.

7. Trommelbremse nach Anspruch 6, wobei der zweite Abschnitt (81 B, 90B, 100B, 111 B) des Installationselements mit einem Spannelement an dem Drehstopp-Abschnitt (40B) befestigt ist.

8. Trommelbremse nach Anspruch 1, wobei zwischen der Backenplatte (40) und dem Abschnitt des Installationselements (80, 110), der zwischen dem ersten und zweiten Abschnitt (81A, 111A, 81B, 111B) des Installationselements liegt, ein Zwischenraum gebildet ist und der Zwischenraum durch kontinuierlichen Nichtkontakt aufrecht erhalten wird, selbst wenn die Backenplatte vibriert.

9. Trommelbremse nach Anspruch 1, wobei das Installationselement einen Teil eines Hinterarms (90, 100) zum Unterstützen eines Hinterrades (WR) durch den Radschaft (26) aufweist, wobei der Hinterarm mit einem ersten und einem zweiten Abschnitt (90A, 100A, 90B, 100B) des Installationselements versehen ist und wobei der Radschaft durch den ersten Abschnitt geführt ist und befestigt ist und ein Drehstopp-Abschnitt (40B) der Backenplatte (40) an dem zweiten Abschnitt befestigt ist.

10. Spreizsitz-Typ-Fahrzeug (1), ausgestattet mit einer Trommelbremse (3, 4, 5, 6) nach einem der Ansprüche 1 bis 9.

## Revendications

1. Frein à tambour (3, 4, 5, 6) comprenant un élément d'installation (80, 110), un tambour de frein (30), une plaque de garniture (40), une ou plusieurs garnitures de frein(50) pouvant se déplacer par rapport à la plaque de garniture, et un arbre de roue (26), dans lequel l'élément d'installation est positionné au voisinage du tambour de frein dans la direction de l'arbre de roue, et comporte une première partie (81A, 90A, 100A, 111A) et une deuxième partie (81B, 90B, 100B, 111B), la première partie étant fixée à la plaque de garniture ou à un autre élément et comprenant un trou à travers lequel s'étend l'arbre de roue, et la deuxième partie étant fixée à la plaque de garniture ou étant pressée contre celle-ci, et dans lequel la fréquence naturelle d'une partie de l'élément d'installation entre la première partie et la deuxième partie est différente de la fréquence naturelle de la plaque de garniture.

2. Frein à tambour selon la revendication 1, dans lequel, lorsque la plaque de garniture (40) vibre, elle comporte une partie de vibration de plus petite amplitude et une partie de vibration de plus grande amplitude, et dans lequel la première partie de l'élément d'installation (80, 110) est fixé à la partie de vibration de plus petite amplitude ou est fixée à un autre élément situé à la partie de vibration de plus petite amplitude, et la deuxième partie de l'élément d'installation est fixée à la partie de vibration de plus grande amplitude ou est pressée contre celle-ci.

3. Frein à tambour selon la revendication 1, dans lequel, lorsque la plaque de garniture (40) vibre, elle comporte une partie de vibration de plus petite amplitude et une partie de vibration de plus grande amplitude, et dans lequel la deuxième partie de l'élément d'installation (80, 110) est fixée à la partie de vibration de plus grande amplitude ou est pressée contre celle-ci, et la première partie de l'élément d'installation est fixée à une partie de la plaque de garniture espacée de la deuxième partie dans la direction radiale de l'arbre de roue (26), ou à un autre élément situé en une partie de la plaque de garniture espacée de la deuxième partie dans la direction radiale de l'arbre de roue.

4. Frein à tambour selon la revendication 1, dans lequel la première partie (81A, 111A) de l'élément d'installation (80, 110) est fixée à l'arbre de roue (26) par l'intermédiaire d'un collier cylindrique (82, 112) sur l'arbre de roue, le trou s'étendant à travers le collier cylindrique.

5. Frein à tambour selon la revendication 4, dans lequel l'élément d'installation (80, 110) est muni d'une plaque d'installation (81, 111) comportant une première partie (81A, 111A) à une extrémité de la plaque d'installation et une deuxième partie (81B, 111B) à l'autre extrémité de la plaque d'installation, dans lequel le trou s'étend à travers la première partie de la plaque cylindrique, le collier cylindrique (82, 112) est fixé à la première partie de la plaque d'installation, et est également fixé à l'arbre de roue (26), et la deuxième partie de la plaque d'installation est fixée à la plaque de garniture (40) ou est pressée contre celle-ci.

6. Frein à tambour selon la revendication 1, dans lequel la deuxième partie (81B, 90B, 100B, 111B) de l'élément d'installation (80, 110) est fixée à une partie d'arrêt de rotation (40B) de la plaque de garniture (40) ou est pressée contre celle-ci.

7. Frein à tambour selon la revendication 6, dans lequel la deuxième partie (81B, 90B, 100B, 111D) de l'élément d'installation est fixée à la partie d'arrêt de rotation (40B) avec un élément de serrage.

8. Frein à tambour selon la revendication 1, dans lequel un espacement est formé entre la plaque de garniture (40) et la partie de l'élément d'installation (80, 110) qui se trouve entre les première et deuxième parties (81A, 111A, 81B, 111B) de l'élément d'installation, et ledit espacement est maintenu avec une absence de contact continue même lorsque la plaque de garniture vibre.

9. Frein à tambour selon la revendication 1, dans lequel l'élément d'installation comprend une partie d'un bras arrière (90, 100) pour supporter une roue arrière (WR) à l'aide de l'arbre de roue (26), le bras arrière étant muni des première et deuxième parties (90A, 100A, 90B, 100B) de l'élément d'installation, et l'arbre de roue traversant la première partie et étant fixe, et une partie d'arrêt de rotation (40B) de la plaque de garniture (40) étant fixée à la deuxième partie.

10. Véhicule du type à selle (1) muni d'un frein à tambour (3, 4, 5, 6) selon l'une quelconque des revendications 1 à 9.
